(19) Europäisches Patentamt
European Patent Office
Office européen des brevets

(11) Veröffentlichungsnummer: **0 344 342 B1**

(12) **EUROPÄISCHE PATENTSCHRIFT**

(45) Veröffentlichungstag der Patentschrift: **12.08.92**

(51) Int. Cl.$^5$: **B29C 49/78**, B29C 47/92

(21) Anmeldenummer: **88108704.3**

(22) Anmeldetag: **31.05.88**

# (54) Elektrische Steuereinrichtung zum Erzeugen eines Steuersignals für die Bewegung des Dorns eines Extruders.

(43) Veröffentlichungstag der Anmeldung:
**06.12.89 Patentblatt 89/49**

(45) Bekanntmachung des Hinweises auf die Patenterteilung:
**12.08.92 Patentblatt 92/33**

(84) Benannte Vertragsstaaten:
**CH DE FR GB IT LI**

(56) Entgegenhaltungen:
**EP-A- 0 058 297**
**US-A- 4 224 560**

**KUNSTSTOFFE Band 76, Nr.6, Juni 1986, Seiten 485 - 488, München, W. Germany; H. BARTHEL et al.: "Automatisieren bei Kunststoffblasformmaschinen"**

**KUNSTSTOFFE Band 75, Nr. 11, November 1985, Seiten 802 - 806, München, W. Germany; D. HESS: "Mikroprozessortechnik im Blasformbetrieb"**

**SYSTEMTECHNIK FUER BLASFORMMASCHINEN Prospekt 823D, 1. Oktober 1983, Böblingen, W. Germany; Firma MOOG**

(73) Patentinhaber: **MOOG GmbH**
**Hanns-Klemm-Strasse 28**
**W-7030 Böblingen(DE)**

(72) Erfinder: **Handte, Herbert**
**Holzwiesenstrasse 2**
**W-7024 Filderstadt 4(DE)**

(74) Vertreter: **Patentanwälte Grünecker, Kinkeldey, Stockmair & Partner**
**Maximilianstrasse 58**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung bezieht sich auf eine elektrische Steuereinrichtung zum Erzeugen eines Steuersignals, mit dem die Bewegung des Dorns im Ausspreßkopf eines Extruders gegenüber der Austrittsöffnung im Auspreßkopf steuerbar ist, nach dem Oberbegriff des Anspruchs 1. Eine solche Steuereinrichtung ist in dem Prospekt 823 D "Systemtechnik für Blasformmaschinen" beschrieben, der im Oktober 1983 von der Firma Moog GmbH, D-7030 Böblingen herausgegeben worden ist.

Um einen Blasformkörper herzustellen, wird mittels eines Extruders zunächst ein im wesentlichen zylindrischer Vorformling gebildet, der in einem sich daran anschließenden Arbeitsgang in einer Blasform auf den gewünschten Außendurchmesser gebracht wird. Bei der Bildung des Vorformlings ist es erforderlich, der späteren Gestalt des herzustellenden Gegenstandes durch Ausbildung unterschiedlicher Wandstärken Rechnung zu tragen, damit das Endprodukt beispielsweise auch dann gleichmäßige Wandstärken aufweist, wenn er auf seiner Länge unterschiedliche Durchmesser aufweist. Dies wird im Extruder dadurch erreicht, daß der im Auspreßkopf angeordnete Dorn, der mit der Austrittsöffnung des Auspreßkopfs einen ringförmigen Spalt begrenzt, längsverschiebbar gelagert ist, so daß die Spaltbreite variabel ist. Um nun das gewünschte Wandstärkenprofil des Vorformlings zu erhalten, muß der Dorn nach einer bestimmten Bewegungsfunktion im Auspreßkopf während des Auspressens des Vorformlings hin und her bewegt werden.

Der Wandstärkenverlauf längs des Vorformlings, auch mit Profil bezeichnet, wird bei der bekannten Steuereinrichtung mit Hilfe einer Vielzahl, beispielsweise 25 Schiebepotentiometern eingestellt, deren Ausgangsspannungen während des Auspressens des Vorformlings nacheinander abgefragt werden, um die Position des Dorns im Auspreßkopf entsprechend zu steuern. Die Potentiometergruppe bildet somit einen Wanddickenprogrammgenerator, der zugleich Speicher für die eingestellten Werte ist.

Die Einstellung des Wanddickenprogramms wird im allgemeinen durch Versuche ermittelt und optimiert. Zur Erleichterung sind neben den Einstellmöglichkeiten für einzelne Wanddickensollwerte weitere Einstellmöglichkeiten vorgesehen, mit denen das Wanddickenprogramm insgesamt beeinflußt werden kann. Bei der in dem genannten Prospekt beschriebenen Steuereinrichtung ist hierzu vorgesehen, daß der Programmbereich eingestellt werden kann. Mit Hilfe dieser Einstellung wird ein Faktor vorgegeben, mit dem jeder der Sollwerte, die von der Potentiometergruppe gegeben werden, multipliziert wird. Weiterhin ist die Möglichkeit vorgesehen, einen Grundspalt einzugeben. Die Wirkung davon ist, daß zu den mit dem Faktor mulitplizierten Signalen ein konstanter Wert, der dem Grundspalt entspricht, hinzuaddiert wird.

Nachteilig an dieser Lösung ist, daß das Verhältnis zwischen dem Programmbereich und dem Grundspalt fest ist, beispielsweise 2 zu 1. Dies bedeutet, daß mit dem Grundspalt maximal ein Drittel des möglichen Wanddickenbereiches eingestellt werden kann, während mit dem Generatorprogramm maximal zwei Drittel variiert werden können. Die Extruderdüse kann daher durch Einstellung des Grundspaltes allein nicht vollständig geöffnet werden. Auch kann sie mit Hilfe des Generatorprogramms allein nicht vollständig geöffnet werden. Sollen ein oder mehrere Sollwerte des Wanddickenprogramms kleiner eingestellt werden, als durch den aktuell eingestellten Grundspalt möglich, dann muß zuerst der Grundspalt verkleinert werden, und anschließend muß das Generatorprogramm nachgestellt werden. Sollen ein oder mehrere Sollwerte des Wanddickenprogrammes größer eingestellt werden, als aufgrund des eingestellten Faktors möglich, dann muß zuerst dieser Faktor vergrößert werden, und anschließend müssen die übrigen Werte des Generatorprogramms entsprechend herabgesetzt werden, um die durch die Änderung des Faktors an ihnen hervorgerufenen Vergrößerungen rückgängig zu machen. Man erkennt, daß Nachstellungen, die gewisse Grenzwerte überschreiten, eine Vielzahl von Neueinstellungen notwendig machen.

Der Erfindung liegt die Aufgabe zugrunde, eine Steuereinrichtung der eingangs genannten Art anzugeben, mit der das Verstellprogramm für den Dorn beliebig verstellt werden kann, ohne daß bei Überschreitung alter eingestellter Grenzwerte eine Nachstellung einer Vielzahl von Programmwerten erforderlich ist.

Diese Aufgabe wird durch die Merkmale des Anspruchs 1 gelöst. Vorteilhafte Ausgestaltungen der Erfindung sind Gegenstand der Unteransprüche.

Gemäß der Erfindung ist demnach ein Speicher vorgesehen, dessen Inhalt jederzeit überschrieben werden kann. Dabei können mit Hilfe einer Sollwerteingabeeinrichtung einzelne, wahlweise ausgewählte Programmwerte überschrieben werden und es können durch Einstellung eines neuen Grundspaltwertes oder eines neuen Faktors an den zugehörigen Eingabeeinrichtungen sämtliche Sollwerte, unter Beachtung des oberen und unteren Grenzwertes neu eingestellt werden. Eine Sollwerteingabe, die zu einer Über- oder Unterschreitung des oberen bzw. unteren Grenzwertes führt, hat eine automatische Korrektur von Faktor bzw. Grundspalt zur Folge. Die im Speicher enthaltenen Sollwerte werden unmittelbar abgefragt und dem Regler zur Einstellung der Dornposition zugeführt.

Die Erfindung wird nachfolgend unter Bezugnahme auf die Zeichnungen, insbesondere anhand eines Blockschaltbildes einer Ausführungsform näher erläutert. Es zeigt:

Fig. 1 ein Blockschaltbild einer Steuereinrichtung nach der Erfindung,

Fig. 2a einen beispielhaften Wanddickenprogrammverlauf, und

Fig. 2b bis 2e Programmverläufe, wie sie sich durch aufeinanderfolgende Änderungen ergeben.

Fig. 1 zeigt als wesentliches Element einen Sollwertspeicher 1, der mit einer numerischen Sollwerteingabeeinrichtung 2 verbunden ist, die eine Zahlentastatur aufweist und eine erste Eingabeeinrichtung darstellt. Mit dieser sind eine Reihe von Sollwerten in den Speicher 1 eingebbar, beispielsweise 25 oder mehr Sollwerte, die im Betrieb eines Extruders (nicht dargestellt) bei der Ausbildung eines Vorformlings nacheinander abgefragt werden. Der Ausgang des Speichers 1 ist mit einem Programmgenerator 3 verbunden, der den Inhalt des Speichers 1 in Abhängigkeit vom Zeitverlauf während eines Presszyklus oder in Abhängigkeit von der Bewegung eines Preßkolbens im Auspreßkopf des Extruders abfragt und den jeweiligen Wert, gegebenenfalls unter Glättung, um Stufen zu vermeiden, dem Regler für die Dornbewegung zuführt.

Der Ausgang des Speichers 1 ist weiterhin mit einer ersten Recheneinrichtung 4 verbunden, die aus sämtlichen, im Speicher 1 enthaltenen Werten einen Grundspaltwert ermittelt. Dieser Grundspaltwert $G_A$ kann beispielsweise der Minimalwert $S_{min}$ der im Speicher 1 enthaltenen Werte sein, wie in der dargestellten und nachfolgend erläuterten Ausführungsform vorausgesetzt. Diese erste Recheneinrichtung 4 ist mit einer Grundspaltanzeigeeinrichtung 5 verbunden, in der die Grundspaltgröße numerisch dargestellt wird. Die Grundspaltrecheneinrichtung 4 stellt eine erste Recheneinrichtung dar.

Der Ausgang des Speichers 1 ist weiterhin mit einer Faktorrecheneinrichtung 6 verbunden, die eine zweite Recheneinrichtung darstellt. In dieser wird ein aus dem im Speicher enthaltenen Maximalwert $S_{max}$ und Minimalwert $S_{min}$ durch Differenzbildung ein Faktor $P_A$ errechnet und in einer Faktoranzeigeeinrichtung 7 numerisch dargestellt.

Weiterhin ist der Ausgang des Speichers 1 mit einer dritten Recheneinrichtung 8 verbunden, die weitere Eingänge aufweist, die mit dem Ausgang einer zweiten Eingabeeinrichtung für die Eingabe des Grundspaltes bzw. mit dem Ausgang der ersten Recheneinrichtung 4 verbunden sind. Der Ausgang der dritten Recheneinrichtung 8 ist mit dem Eingang des Speichers 1 verbunden.

Außerdem ist der Ausgang des Speichers 1 mit einer vierten Recheneinrichtung 10 verbunden, die weitere Eingänge aufweist, die mit einer dritten Eingabeeinrichtung für den Faktor bzw. mit dem Ausgang der zweiten Recheneinrichtung verbunden sind. Der Ausgang der vierten Rechneneinrichtung ist gleichfalls mit dem Speicher 1 verbunden. Mit Hilfe der Ausgänge der dritten und vierten Recheneinrichtungen, die Sollwerte errechnen, sind die im Speicher 1 enthaltenen Werte überschreibbar.

Wird über die Grundspalteingabeeinrichtung 9 ein neuer Grundspalt eingegeben, dann wird dieser der dritten Recheneinrichtung zugeführt. Diese berechnet daraufhin die im Speicher enthaltenen Werte gemäß folgender Formel neu:

$$S_N = S_A - G_A + G_N,$$

wobei:

- $S_N$ = neu berechneter Sollwert
- $S_A$ = noch im Speicher 1 enthaltener Wert, der nach Abschluß der Berechnung durch den neuen Wert $S_N$ überschrieben wird,
- $G_A$ = alter Grundspaltwert, welcher aus den noch im Speicher 1 enthaltenen Werten berechnet wurde
- $G_N$ = neu eingegebener Grundspalt.

Wird über die dritte Eingabeeinrichtung 11 ein neuer Faktor eingegeben, dann werden die im Speicher enthaltenen Werte durch die vierte Recheneinrichtung 10 entsprechend dem folgenden Zusammenhang neu berechnet:

$$S_N = (S_A - G_A) \times \frac{P_N}{P_A} + G_A,$$

wobei:

- $S_N$ = neu berechneter Sollwert
- $S_A$ = alter Sollwert
- $G_A$ = Grundspalt, der sich durch die Eingabe eines neuen Faktors nicht ändert
- $P_A$ = alter Faktor, der aus den im Speicher noch enthaltenen Werten berechnet wurde und neu berechnet wird, wenn neue Sollwerte in den Speicher 1 eingespeichert werden,
- $P_N$ = neu eingegebener Faktor.

Man erkennt aus diesen Zusammenhängen auch, daß aufgrund von individuellen Sollwerteingaben an der ersten Eingabeeinrichtung 2 in den ersten und zweiten Recheneinrichtung ein neuer Grundspaltwert und ein neuer Faktor ermittelt werden, wenn ein neu eingegebener Individual-Sollwert jenseits jener Grenzen liegt, die für die Berechnung des alten Grundspaltwertes bzw. des alten Faktors maßgebend waren.

Man erkennt in der Zeichnung weiterhin eine Anzeigeeinrichtung 12, die die im Speicher 1 enthaltenen Werte in Form einer graphischen Darstellung als Kurve optische darstellt. Die Bedienperson kann sich auf diese Weise einen schnellen Überblick über das im Speicher eingestellte Programm machen.

Nachfolgend soll anhand Fig. 2 der Einfluß von Neueingaben an einigen Beispielen erläutert werden.

Fig. 2a zeigt einen stark verkürzten Wanddickenprogrammverlauf mit folgenden Ausgangswerten, die in dem Sollwertspeicher 1 als Sollwerte S1 bis S5 gespeichert sind:
S1 = 4, S2 = 8, S3 = 6, S4 = 6 und S5 = 2. Entsprechend der vorangehenden Vorgaben und mit den vorangehend verwendeten Begriffen ergibt sich aus diesen Speicherwerten:
$G_A = S_{min} = 2$

$P_A = S_{max} - S_{min} = 8 - 2 = 6.$

Es sei nun gemäß Fig. 2b angenommen, daß ein neuer Sollwert für S4 eingegeben werde, nämlich S4 = 10. Der neue Wanddickenprogrammverlauf ist in Fig. 2b mit ausgezogenen Linien dargestellt, während der alte Wanddickenprogrammverlauf, soweit er vom neuen abweicht, mit gestrichelten Linien eingezeichnet ist. Man sieht, daß bis auf S4 alle übrigen Werte, insbesondere der Grundspaltwert S5 = 2 unverändert geblieben sind.

Auf der Grundlage der zuvor erläuterten Zusammenhänge ergibt sich für den neuen Faktor:

$P_N = S_{max} - S_{min} = 10 - 2 = 8.$

Ausgehend von dem in Fig. 2b dargestellten Programmverlauf sei nun angenommen, daß der Faktor verändert werde, und zwar sei der neue Faktor $P_N = 4$. Der sich daraus ergebende Wanddickenprogrammverlauf ist in Fig. 2c aufgetragen. Man erkennt, daß bis auf den Grundspaltwert S5 alle anderen Speicherwerte verändert worden sind, und zwar ist der über den Grundspaltwert hinausgehende Anteil entsprechend dem neuen Faktor verändert worden gemäß dem Zusammenhang:

$S_N = (S_A - G_A)\, P_N/P_A + G_A.$

Mit
$G_A = S_{min} = 2$ und
$P_A = S_{max} - S_{min} = 6 - 2 = 4$ ergeben sich
S1 = (4 - 2) 4/8 + 2 = 3
S2 = (8 - 2) 4/8 + 2 = 5
S3 = (6 - 2) 4/8 + 2 = 4
S4 = (10 - 2) 4/8 + 2 = 6
S5 = (2 - 2) 4/8 + 2 = 2.

Als nächstes Beispiel sei angenommen, daß ein neuer Sollwert für S3 eingegeben werde, und zwar sei S3 = 1. Das Ergebnis ist in Fig. 2d dargestellt.

Da in diesem Falle der neue Grundspaltwert unter dem alten Grundspaltwert liegt, gilt nun
$G_N = S_{min} = 1$, und errechnet sich daraus

$P_N = S_{max} - S_{min} = 6 - 1 = 5.$

Ausgehend vom Wanddickenprogrammverlauf nach Fig. 2d sei nun angenommen, daß ein neuer Grundspalt mit $G_N = 4$ eingegeben werde. Der Erfolg dieser Maßnahme ist in Fig. 2e dargestellt. Man erkennt aus dieser Figur, daß sämtliche Speicherwerte um die Differenz zwischen dem alten Grundspaltwert und dem neuen Grundspaltwert verändert worden sind entsprechend dem Zusammenhang:

$S_N = S_A - G_A + G_N.$

Mit
$G_A = S_{min} = 1$ ergeben sich somit
S1 = 3-1 + 4 = 6
S2 = 5-1 + 4 = 8
S3 = 1-1 + 4 = 4
S4 = 6-1 + 4 = 9
S5 = 2-1 + 4 = 5.

**Patentansprüche**

1. Elektrische Steuereinrichtung zum Erzeugen eines Steuersignals, mit dem die Bewegung des Dorns im Auspreßkopf eines Extruders gegenüber dem Auspreßkopf steuerbar ist, um die Wanddicke eines aus dem Auspreßkopf ausgepressten Vorformlings aus thermoplastischem Kunststoff, der anschließend in einer Blasform aufgeweitet wird, zu steuern, mit einer ersten Eingabeeinrichtung zur Eingabe einer Vielzahl von Sollwerten für Wanddicken, die beim Auspressen des thermoplastischen Kunststoffs aus dem Auspresskopf nacheinander abgefragt werden, um einen einem Regler zugeführten Signalverlauf zu erzeugen, der die Stellung des Dorns bestimmt, einer zweiten Eingabeeinrichtung zum Einstellen eines Grundspaltes zwischen dem Dorn und dem Auspresskopf, die ein einem Grundspalt entsprechendes Signal erzeugt, einer Addiereinrichtung, in der das dem Grundspalt entsprechende Signal dem dem Regler zugeführten Signal hinzuaddiert wird, einer dritten Eingabeeinrichtung zum Einstellen eines Faktors, und einer Recheneinrichtung, in der die an der ersten Eingabeeinrichtung eingegebenen Sollwerte mit dem eingestellten Faktor multipliziert werden, **gekennzeichnet durch** folgende Merkmale:
die erste Eingabeeinrichtung (2) ist mit einem Speicher (1) verbunden, der die an der ersten Eingabeeinrichtung (2) eingegebenen Werte entgegenimmt,
der Ausgang des Speichers (1) ist mit einer ersten (Grundspalt-) Recheneinrichtung (4) verbunden, die aus den im Speicher enthaltenen Werten eine dem Grundspalt entsprechende Größe ($G_A$) errechnet,
der Ausgang des Speichers (1) ist mit einer zweiten (Faktor-) Recheneinrichtung (6) verbunden, die aus den im Speicher (1) enthaltenen Maximal- und Minimalwerten eine dem Faktor entsprechende Größe ($P_A$) errechnet,
der Ausgang des Speichers (1) ist ferner mit einer dritten (Sollwert-) Recheneinrichtung (8) verbunden, die auch mit der zweiten Eingabeeinrichtung und mit dem Ausgang der ersten Recheneinrichtung verbunden ist und die bei Neueinstellung eines Grundspaltes den entsprechenden neuen Wert ($G_N$) zu jeder Differenz aus den alten Sollwerten ($S_A$) und dem alten Grundspaltwert ($G_A$) hinzuaddiert,
der Ausgang des Speichers (1) ist mit einer vierten (Sollwert-) Recheneinrichtung (10) verbunden, die auch mit den Ausgängen der ersten und zweiten Recheneinrichtungen (4, 6) und mit der dritten Eingabeeinrichtung (11) verbunden ist und die bei jeder Neueinstellung eines Faktors ($P_N$) jede Differenz aus den alten Sollwerten ($S_A$) und dem alten Grundspaltwert ($G_A$) mit dem Quotienten aus dem neuen Faktor ($P_N$) und dem alten Faktor ($P_A$) multipliziert und zu den Ergebnissen den alten Grundspaltwert ($G_A$) hinzuaddiert und die Summen als neue Werte ($S_N$) in den Speicher (1) einschreibt.

2. Steuereinrichtung nach Anspruch 1, **dadurch gekennzeichnet,** daß die erste Recheneinrichtung (4) den Grundspalt ($G_A$) als den kleinsten im Speicher (1) enthaltenen Sollwert ($S_{min}$) ermittelt.

3. Steuereinrichtung nach Anspruch 1 oder 2, **dadurch gekennzeichnet,** daß die zweite Recheneinrichtung (6) den Faktor ($P_A$) als Differenz zwischen dem größten und dem kleinsten im Speicher (1) enthaltenen Sollwert ($S_{max}$, $S_{min}$) ermittelt.

4. Steuereinrichtung nach einem der vorhergehenden Ansprüche, **dadurch gekennzeichnet,** daß die erste Recheneinrichtung (4) mit einer Grundspaltanzeigeeinrichtung (5) verbunden ist.

5. Steuereinrichtung nach einem der vorhergehenden Ansprüche, **dadurch gekennzeichnet,** daß die zweite Recheneinrichtung (6) mit einer Faktoranzeigeeinrichtung (7) verbunden ist.

6. Steuereinrichtung nach einem der vorhergehenden Ansprüche, **dadurch gekennzeichnet,** daß der Speicher (1) mit einer Sollwertanzeigeeinrichtung (12) verbunden ist, die eine der Folge der im Speicher (1) enthaltenen Sollwerte entsprechende Kurve graphisch darstellt.

7. Steuereinrichtung nach einem der vorhergehenden Ansprüche, **dadurch gekennzeichnet,** daß die Eingabeeinrichtungen (2, 9, 11) jeweils eine numerische Tastatur aufweisen.

8. Steuereinrichtung nach einem der vorhergehenden Ansprüche, **dadurch gekennzeichnet,** daß die erste Recheneinrichtung (4) den Grundspalt ($G_A$) als den größten im Speicher (1) enthaltenen Sollwert ($S_{max}$) ermittelt.

9. Steuereinrichtung nach einem der vorhergehenden Ansprüche, **dadurch gekennzeichnet,** daß die erste Recheneinrichtung (4) den Grundspalt ($G_A$) als einen mittleren Wert der im Speicher (1) enthaltenen Sollwerte, insbesondere als

$$\frac{S_{max} + S_{min}}{2}$$

ermittelt.

10. Steuereinrichtung nach einem der vorhergehenden Ansprüche, **dadurch gekennzeichnet,** daß die zweite Recheneinrichtung (6) den Faktor ($P_A$) als den größten im Speicher (1) enthaltenen Sollwert ($S_{max}$) ermittelt.

## Claims

1. An electrical control system for generating a control signal by means of which it is possible to control the movement of the mandrel in the extrusion head of an extruder relative to this head, in order to control the wall thickness of a blank of synthetic thermoplastic material extruded from the head, the blank being subsequently expanded in a blowing mould, having a first input device for inputting a plurality of set values for wall thicknesses, which during extrusion of the thermoplastic material from the head are successively scanned in order to generate a signal variation fed to a controller which determines the position of the mandrel, a second input device for setting a base clearance between the mandrel and the head, which device generates a signal corresponding to a base clearance, an adding device in which the signal corresponding to the base clearance is added to the signal fed to the controller, a third input device for setting a factor, and a calculating device in which the set values input at the first input device are multiplied by the factor set,
characterised by the following features:
the first input device (2) is connected to a memory (1) which accepts the values input at the first input device (2),
the output of the memory (1) is connected to a first (base clearance) calculating device (4), which calculates from the values stored in the memory a quantity ($G_A$) corresponding to the base clearance,
the output of the memory (1) is connected to a second (factor) calculating device (6), which calculates from the maximum and minimum values stored in the memory (1) a quantity ($P_A$) corresponding to the factor,
the output of the memory (1) is also connected to a third (set value) calculating device (8), which is also connected to the second input device and to the output of the first calculating device, and which, on resetting of a base clearance, adds the corresponding new value ($G_N$) to any difference between the old set values ($S_A$) and the old base clearance value ($G_A$),
the output of the memory (1) is connected to a fourth (set value) calculating device (10), which is also connected to the outputs of the first and second calculating devices (4, 6) and to the third input device (11), and which, whenever a factor ($P_N$) is reset, multiplies any difference between the old set values ($S_A$) and the old base clearance value ($G_A$) by the ratio of the new factor ($P_N$) and the old factor ($P_A$) and adds the old base clearance value ($G_A$) to the products and writes the sums as new values ($S_N$) to the memory (1).

**2.** A control system as claimed in claim 1, characterised in that the first calculating device (4) determines the base clearance ($G_A$) as the lowest set value ($S_{min}$) stored in the memory (1).

**3.** A control system as claimed in claim 1 or 2, characterised in that the second calculating device (6) determines the factor ($P_A$) as the difference between the highest and lowest set values ($S_{max}$, $S_{min}$) stored in the memory (1).

**4.** A control system as claimed in any of the preceding claims, characterised in that the first calculating device (4) is connected to base clearance display means (5).

**5.** A control system as claimed in any of the preceding claims, characterised in that the second calculating device (6) is connected to factor display means (7).

**6.** A control system as claimed in any of the preceding claims, characterised in that the memory (1) is connected to set value display means (12) which represent graphically a curve corresponding to the sequence of set values stored in the memory (1).

**7.** A control system as claimed in any of the preceding claims, characterised in that the input devices (2, 9, 11) have respective numeric keys.

**8.** A control system as claimed in any of the preceding claims, characterised in that the first calculating device (4) determines the base clearance ($G_A$) as the highest set value ($S_{max}$) stored in the memory (1).

**9.** A control system as claimed in any of the preceding claims, characterised in that the first calculating device (4) determines the base clearance ($G_A$) as an average of the set values stored in the memory (1),
more particularly as

$$\frac{S_{max} + S_{min}}{2} .$$

**10.** A control system as claimed in any of the preceding claims, characterised in that the second calculating device (6) determines the factor ($P_A$) as the highest set value ($S_{max}$) stored in the memory (1).

## Revendications

**1.** Dispositif de commande électrique servant à générer un signal de commande par lequel peut être commandé le déplacement du poinçon dans la tête d'extrusion d'une extrudeuse, par rapport à cette tête, afin de régler l'épaisseur de paroi d'une paraison en matière thermoplastique extrudée de la tête et qui est ensuite élargie dans un moule de soufflage, comprenant un premier dispositif d'entrée pour introduire un grand nombre de valeurs de consigne d'épaisseurs de paroi, qui sont lues l'une après l'autre lors de l'extrusion de la matière thermoplastique de la tête en vue de la génération d'une allure de signal appliquée à un régulateur et déterminant la position du poinçon, un deuxième dispositif d'entrée pour ajuster une fente de base entre le poinçon et la tête d'extrusion, qui génère un signal correspondant à une fente de base, un dispositif d'addition dans lequel le signal correspondant à la fente de base est ajouté au signal appliqué au régulateur, un troisième dispositif d'entrée pour ajuster un facteur, ainsi qu'un dispositif de calcul dans lequel les valeurs de consigne introduites sur le premier dispositif d'entrée sont multipliées par le facteur ajusté,
caractérisé en ce que:
le premier dispositif d'entrée (2) est connecté à une mémoire (1) qui reçoit les valeurs introduites sur le premier dispositif d'entrée (2),
la sortie de la mémoire (1) est connectée à un premier dispositif de calcul (de la fente de base) (4) qui calcule une grandeur ($G_A$) correspondant à la fente de base à partir des valeurs contenues dans la mémoire,
la sortie de la mémoire (1) est connectée à un deuxième dispositif de calcul (d'un facteur) (6) qui calcule une grandeur ($P_A$) correspondant au facteur à partir des valeurs maximale et minimale contenues dans la mémoire (1),
la sortie de la mémoire (1) est connectée en outre à un troisième dispositif de calcul (d'une valeur de consigne) (8) qui est également connecté au deuxième dispositif d'entrée et à la sortie du premier dispositif de calcul et qui, lors d'un nouvel ajustement d'une fente de base, ajoute la nouvelle valeur ($G_N$) correspondante à toute différence des anciennes valeurs de consigne ($S_A$) et de l'ancienne valeur de la fente de base ($G_A$) et
la sortie de la mémoire (1) est connectée à un quatrième dispositif de calcul (d'une valeur de consigne) (10) qui est également connecté aux sorties des premier et deuxième dispositifs de calcul (4, 6) et au troisième dispositif d'entrée (11) et qui, à chaque nouvel ajustement d'un facteur ($P_N$), multiplie toute différence des anciennes valeurs de consigne ($S_A$) et de l'ancienne valeur de la fente de base ($G_A$) par le quotient du nouveau facteur ($P_N$) et de l'ancien facteur ($P_A$), ajoute l'ancienne valeur de la fente de base ($G_A$) aux résultats et inscrit les sommes en tant que nouvelles valeurs ($S_N$) dans la mémoire (1).

**2.** Dispositif de commande selon la revendication 1, caractérisé en ce que le premier dispositif de calcul (4) détermine comme fente de base ($G_A$) la plus petite valeur de consigne ($S_{min}$) contenue dans la mémoire (1).

**3.** Dispositif de commande selon la revendication 1 ou 2, caractérisé en ce que le deuxième dispositif de calcul (6) détermine comme facteur ($P_A$) la différence entre la plus grande et la plus petite valeur de consigne ($S_{max}$, $S_{min}$) contenues dans la mémoire (1).

**4.** Dispositif de commande selon une des revendications précédentes, caractérisé en ce que le premier dispositif de calcul (4) est connecté à un afficheur de fente de base (5).

**5.** Dispositif de commande selon une des revendications précédentes, caractérisé en ce que le deuxième dispositif de calcul (6) est connecté à un afficheur de facteur (7).

**6.** Dispositif de commande selon une des revendications précédentes, caractérisé en ce que la mémoire (1) est connectée à un afficheur de valeurs de consigne (12) qui représente graphiquement une courbe correspondant à la succession des valeurs de consigne contenues dans la mémoire (1).

**7.** Dispositif de commande selon une des revendications précédentes, caractérisé en ce que les dispositifs d'entrée (2, 9, 11) comportent chacun un clavier numérique.

**8.** Dispositif de commande selon une des revendications précédentes, caractérisé en ce que le premier dispositif de calcul [4) détermine comme fente de base ($G_A$) la plus grande valeur de consigne ($S_{max}$) contenue dans la mémoire (1).

**9.** Dispositif de commande selon une des revendications précédentes, caractérisé en ce que le premier dispositif de calcul (4) détermine comme fente de base ($G_A$) une valeur moyenne des valeurs de consigne contenues dans la mémoire (1),
en particulier selon la formule

$$\frac{S_{max} + S_{min}}{2}$$

**10.** Dispositif de commande selon une des revendications précédentes, caractérisé en ce que le deuxième dispositif de calcul (6) détermine comme facteur ($P_A$) la plus grande valeur de consigne ($S_{max}$) contenue dans la mémoire (1).

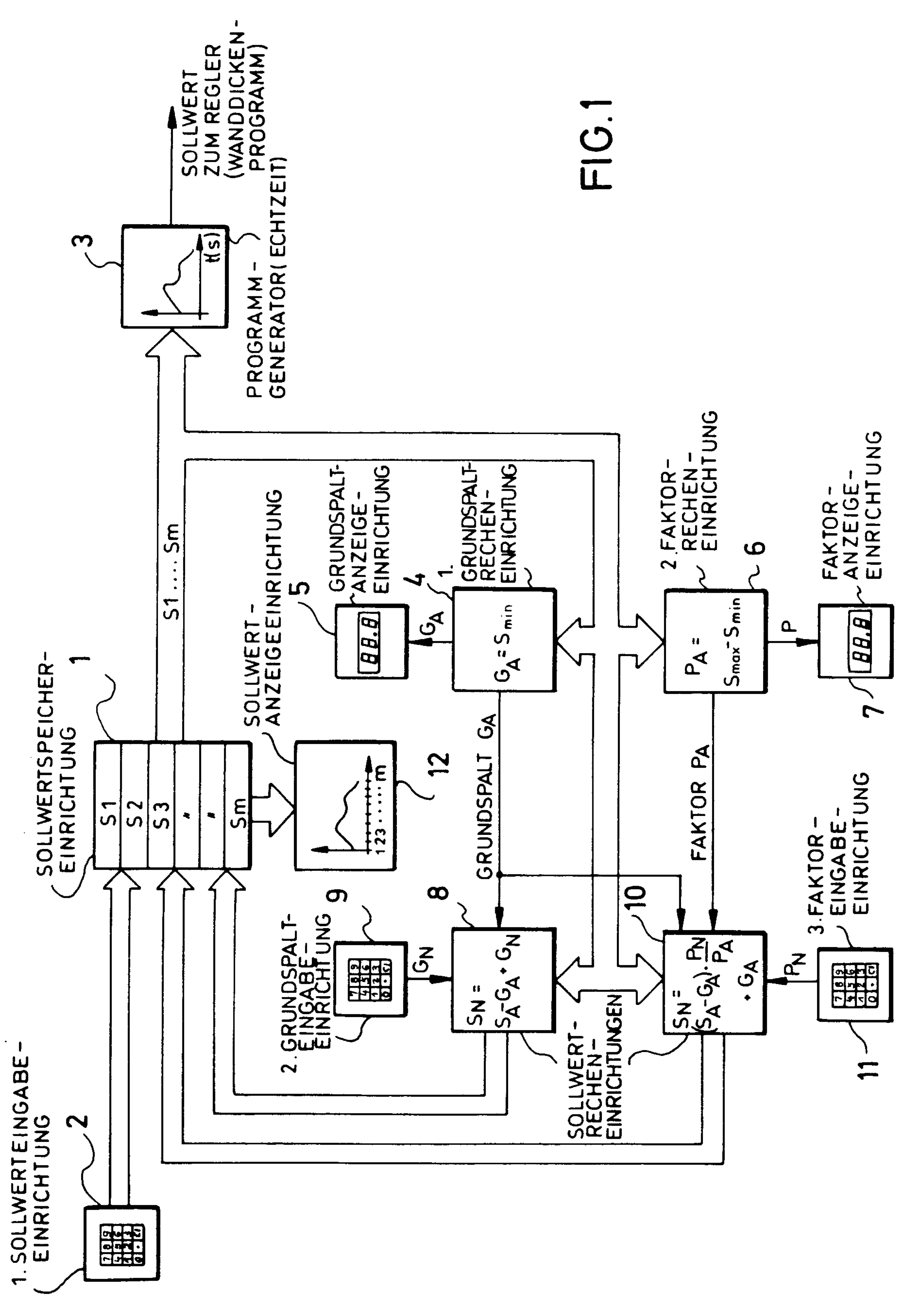
1. SOLLWERTEINGABE-EINRICHTUNG
2
SOLLWERTSPEICHER-EINRICHTUNG
1
S1
S2
S3
Sm
S1 .... Sm
SOLLWERT-ANZEIGEEINRICHTUNG
12
123 ..... m
3
t(s)
PROGRAMM-GENERATOR (ECHTZEIT)
SOLLWERT ZUM REGLER (WANDDICKEN-PROGRAMM)
GRUNDSPALT-ANZEIGE-EINRICHTUNG
5
88.8
4
1. GRUNDSPALT-RECHEN-EINRICHTUNG
$G_A = S_{min}$
$G_A$
2. FAKTOR-RECHEN-EINRICHTUNG
6
$P_A = S_{max} - S_{min}$
P
FAKTOR-ANZEIGE-EINRICHTUNG
7
GRUNDSPALT $G_A$
FAKTOR $P_A$
2. GRUNDSPALT-EINGABE-EINRICHTUNG
9
$G_N$
8
$S_N = S_A - G_A + G_N$
10
$S_N = (S_A - G_A) \cdot \frac{P_N}{P_A} + G_A$
$P_N$
3. FAKTOR-EINGABE-EINRICHTUNG
11
SOLLWERT-RECHEN-EINRICHTUNGEN

FIG.1

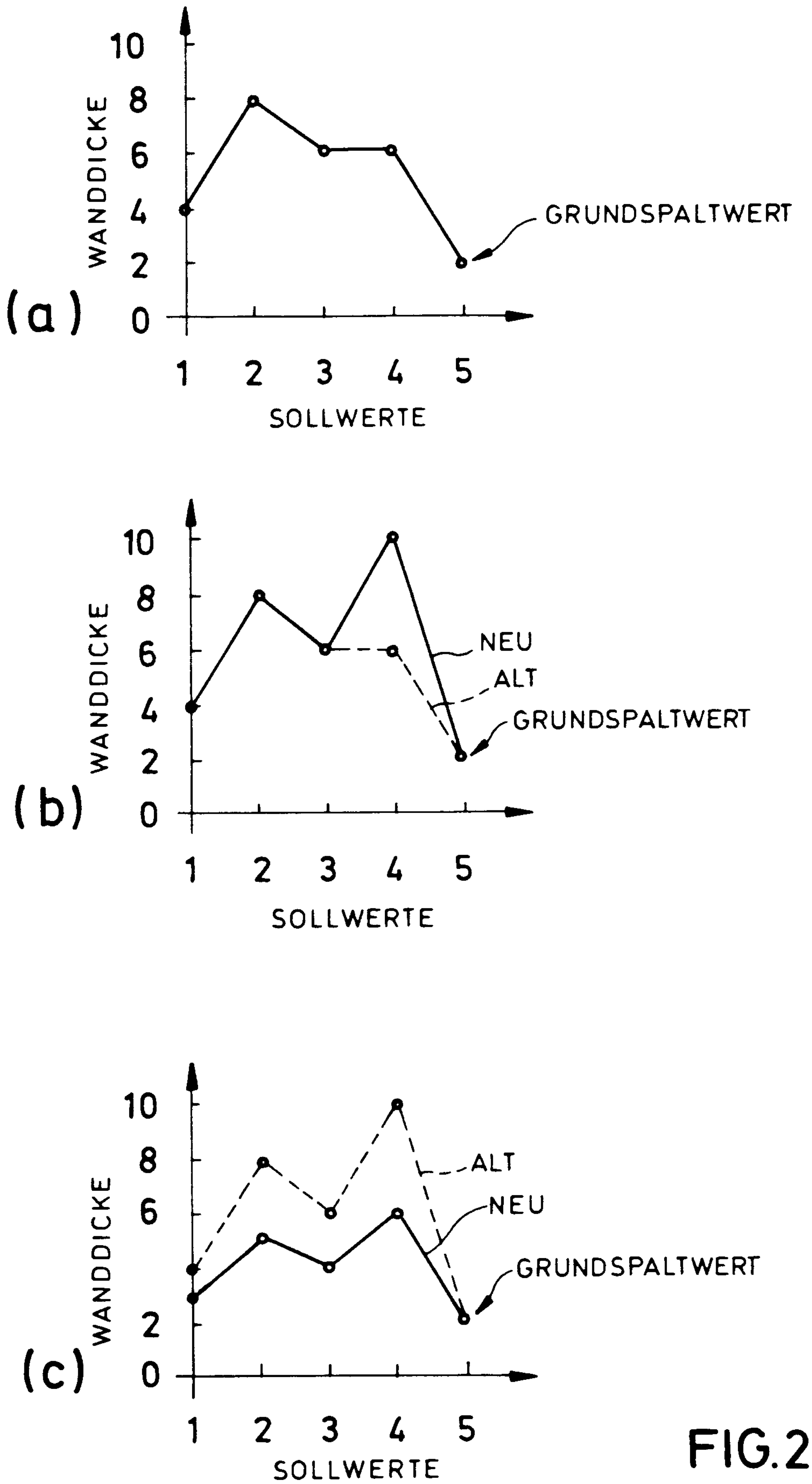
10
8
6
4
2
0
WANDDICKE
(a)
GRUNDSPALTWERT
1
2
3
4
5
SOLLWERTE
10
8
6
4
2
0
WANDDICKE
(b)
NEU
ALT
GRUNDSPALTWERT
1
2
3
4
5
SOLLWERTE
10
8
6
2
0
WANDDICKE
(c)
ALT
NEU
GRUNDSPALTWERT
1
2
3
4
5
SOLLWERTE

FIG.2

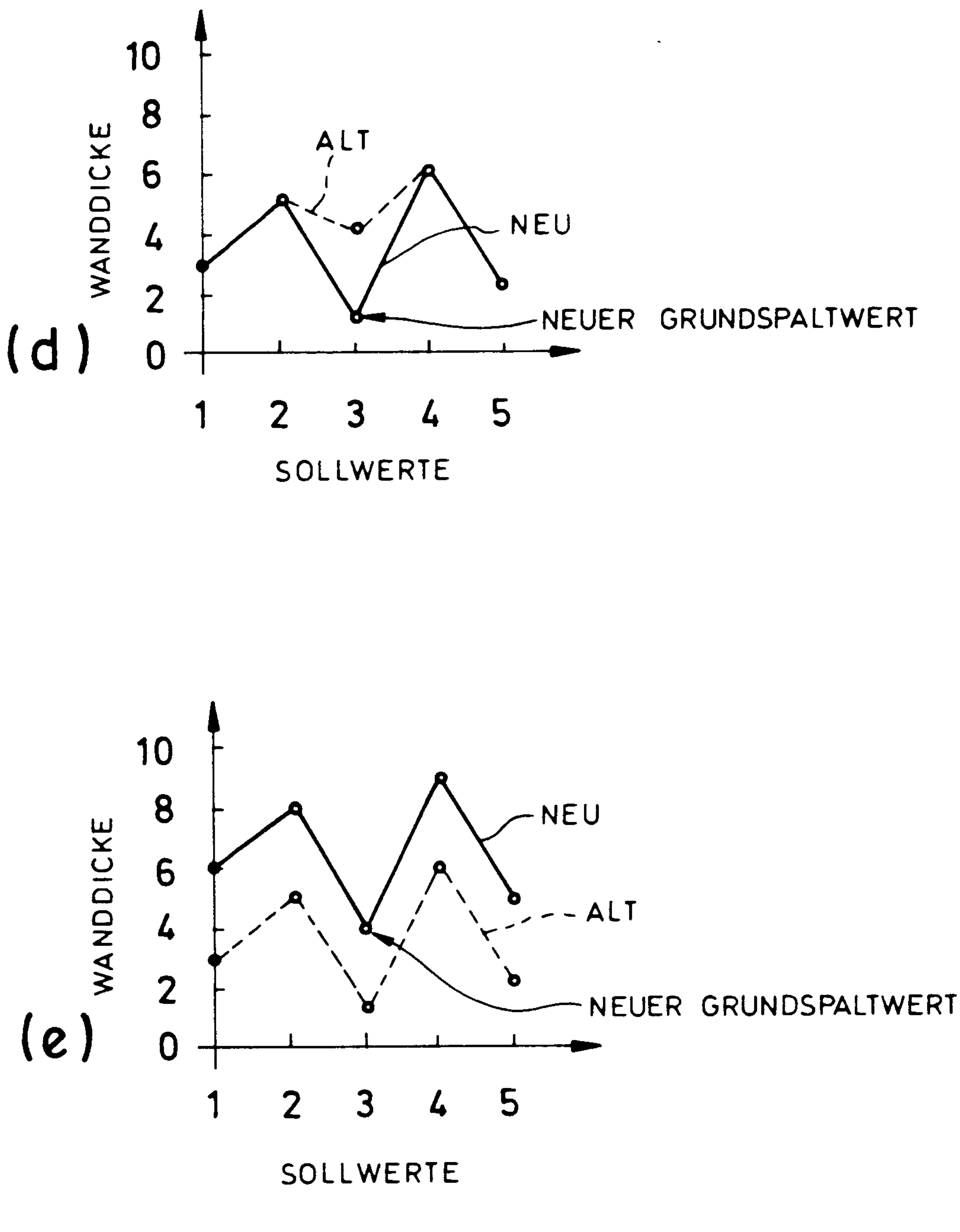
(d)
WANDDICKE
10
8
6
4
2
0
ALT
NEU
NEUER GRUNDSPALTWERT
1 2 3 4 5
SOLLWERTE
(e)
WANDDICKE
10
8
6
4
2
0
NEU
ALT
NEUER GRUNDSPALTWERT
1 2 3 4 5
SOLLWERTE

FIG. 2